# EUROPEAN PATENT APPLICATION

(11) **EP 1 698 866 A1**
(43) Date of publication of application: **06.09.2006**
(21) Application number: 05447049.7
(22) Date of filing: 04.03.2005
(51) Int. Cl.: G01F 11/00, B65G 53/00, B28C 9/00, G01G 13/00

(54) **Dosing system and method**

(71) Applicant: Roelens, Ignace, 8830 Hooglede (BE)
(72) Inventor: Roelens, Ignace, 8830 Hooglede (BE)
(74) Representative: Van Malderen, Joëlle

(57) **Abstract**

The present invention is related to a dosing system for adding a product to be dosed to a bulk product being discharged, comprising
- a dosing device (100) containing the product to be dosed,
- a first weighing unit (250) comprising a plurality of weighing sensors arranged for weighing the product to be dosed and
- a computer device (300) arranged for receiving weighing data from the first weighing unit and weighing data related to the bulk product and arranged for adjusting the discharge rate of the dosing device, based on the received weighing data.

## Description

### Field of the invention

The present invention relates to a mobile dosing system for adding a product to be dosed into a bulk product.

### State of the art

In recent years there has been a growing interest at various levels (not in the least with both European and national authorities) in improving the safety of the food chain. Given this background there is also a growing need to better control e.g. the process of adding medicines or food supplements in a production line of compound feeds. Issues like obtaining an accurate, precise predefined mix are of major importance. In any case an error tolerance must be guaranteed that is below the GMP (Good Manufacturing Practice) requirements.

In order to add a product to be dosed (e.g. vitamins, medication or any product in powder) to a bulk product a dosing device is used. This operation is often performed when transporting feed from a bulk lorry to a silo. Typically the dosing device has a reservoir from which a component is mixed into a large amount of bulk product. The dosing device is positioned between two parts of a transport tube and has at its upper side an open funnel shaped reservoir having at its bottom a rotatable axis provided with protrusions. However this approach has some serious drawbacks. During operation clouds of dust or powder can be released via the funnel. Weather conditions (e.g. humidity) can affect the performance. There is also a safety problem as all rotatable parts can be reached. Moreover it is difficult to control the dosing of the product into the bulk product.

Patent document BE1010363A4 discloses a dosing device comprising a reservoir made as an airtight pressure chamber sealed from the outside environment. In this way the dosing device forms a closed system under pressure such that the previously mentioned clouds of dust or powder are avoided. Further there is no pressure difference between the reservoir and the transport tube, which prevents the dosed product from being blown back. This facilitates the control of the dosing.

An important drawback of the above-described solution is that the system needs to be adjusted by e.g. the lorry driver. This may give rise to deviations from the optimal mixing proportions.

Patent document FR2830616 relates to a device for targeted weighing and dosing of a bulk material, coming from a collecting vessel in order to be fed to a casting ladle. Essentially it is made up of a mobile combination of a dosing vessel, a conveying device and a combined weighing and dosing unit. It is primarily meant for use in siderurgy applications.

### Aims of the invention

The present invention aims to provide a dosing system for adding a product to be dosed to a bulk product with enhanced accuracy and reliability.

### Summary of the invention

The present invention relates to a dosing system for adding a product to be dosed to a bulk product while said bulk product is being discharged, comprising
- a dosing device containing the product to be dosed,
- a first weighing unit comprising a plurality of weighing sensors arranged for weighing the product to be dosed and
- a computer device arranged for receiving weighing data from the first weighing unit and weighing data related to the bulk product and arranged for adjusting the discharge rate of the dosing device, based on said received weighing data.

In another preferred embodiment the plurality of weighing sensors of the first weighing unit comprises load cells. The load cells are mounted in a chassis bearing the dosing device.

In a preferred embodiment the dosing system further comprises a second weighing unit comprising a plurality of weighing sensors arranged for providing the weighing data related to the bulk product. The plurality of weighing sensors of the second weighing unit advantageously comprises load cells and air pressure sensors. Preferably the second weighing unit further comprises air transducers.

In a further embodiment the computer device is arranged for storing weighing data and/or information related to the dosing and discharge process. Typically the computer device is a microprocessor.

Preferably the dosing device is further provided with a transparent pipe through for injecting the product to be dosed into the bulk product.

In a specific embodiment the invention also relates to a bulk truck or a bulk trailer on which a dosing system is mounted as previously described. In such a bulk truck or a bulk trailer the dosing system is advantageously driven by the power supply of the bulk truck or of a truck to which the bulk trailer is coupled.

In a second aspect the invention relates to a method for adding a product to be dosed to a bulk product. The method comprises the steps of
- providing a dosing system as previously described,
- determining the weight of the bulk product to be discharged,
- determining the weight of the product to be dosed, said product to be dosed being contained in the dosing device of the dosing system,
- initiating the discharge of the bulk product,
- calculating the rate at which the product to be dosed is added,
- adding at the calculated rate the product to be dosed to the bulk product being discharged,
- performing repeated weighing operations on the weight of the remaining bulk product and the remaining product to be dosed.
- adjusting repeatedly the discharge rate based on data from the repeated weighing operations.

### Short description of the drawings

Fig. 1 represents the main parts of a dosing system according to the present invention.

Fig. 2 represents the dosing device of the dosing system according.

Fig. 3 represents a trailer provided with several compartments comprising bulk product.

Fig. 4 represents the dosing device and the chassis bearing it.

### Detailed description of the invention

In the solution according to the present invention a dosing system is disclosed allowing a very precise dosing that is adjustable to variable parameters like e.g. the volume and weight of the product to be dosed and the discharge rate of the bulk lorry or bulk trailer.

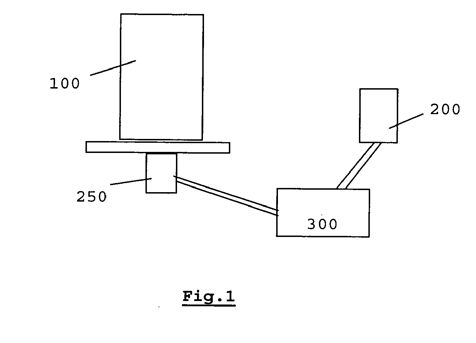

Fig.1 shows a general view of the dosing system according to the invention. The system comprises a dosing device (100) comprising the product to be dosed, a first weighing unit (250) comprising a plurality of weighing sensors for weighing that product to be dosed, preferably a second weighing unit (200) with a plurality of weighing sensors for weighing the bulk product to which the product to be dosed is to be added, and a computer device (300). The system typically is applied for adding a product to be dosed into a bulk product from a bulk lorry or truck to a silo. The system is based on a volumetric dosing on a truck, a lorry or a trailer. Preferably the system is mounted on the vehicle and operates with the power supply of the vehicle (24 V DC and air pressure).

The dosing device forming part of the dosing system according to the invention basically is a dosing device like the one disclosed in BE1010363. A cog distributes and transports a product to be dosed (e.g. in powder) by bringing it into an air stream. After it has left the dosing device it is injected into the stream of bulk product that has left the bulk lorry. In this way any risk of contamination is avoided.

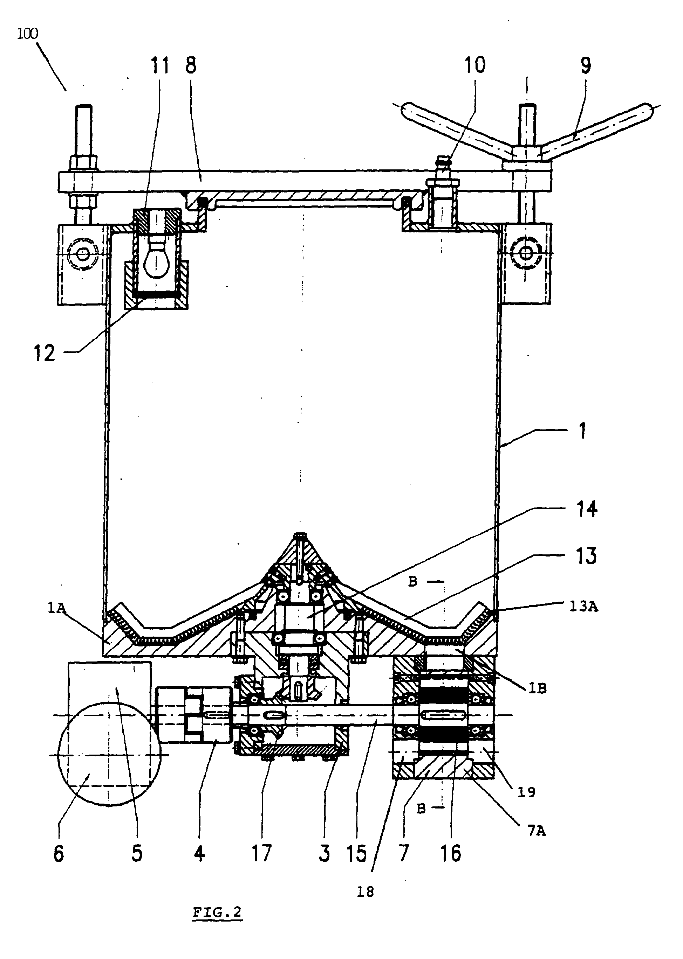

Figure 2 shows a cross section of the cylindrical dosing device (100). A light (11) is hermetically sealed and put behind window glass. The bottom 1A of the reservoir 1, which is made as an airtight pressure chamber, has a W-shaped cross section. At the bottom there is also an outlet opening (1B). In the middle a drive shaft (14) (3 x supported on bearings to absorb axial and radial tensions) enters through the bottom into the reservoir. To the shaft (14) is attached at least one rotatable conic scraper (13) extending radially slightly above the bottom (1A). The scraper (13) is provided with brushes 13A scraping across the base (1A). As further shown in Fig.2 the dosing means (7) is shaped by a cog-shaped rotor (16) in a rotor housing (7A) that is located under an outlet opening (1B) in the base (1A) of the reservoir (1). Preferably the rotor (16) is made of synthetic material, giving the rotor smooth surfaces in order to avoid sticking and contamination. The rotor is mounted on a drive shaft (15). The product to be dosed radially ends up between the cogs in the rotor casing (7A) via the outlet opening (1B). Subsequently it is transported between a compressed air inlet opening (18) situated axially in the rotor casing and the opposite discharge opening (19) and injected into the bulk product by means of a pipe. Advantageously, this pipe is transparent such that it allows a visual inspection of the dosing process. The quantity of dosed product depends on the rotor speed and the space between the cogs in the rotor. The rotor's profile is such that it contributes as much as possible in keeping the flow of the product to be dosed constant. The dosing means (7) are driven by a continuously variable impulse control driving electro-motor (6) with high precision. The dosing device is typically driven by a 24 V DC motor.

In the solution according to the present invention, the discharge rate of the product to be dosed is determined based on measurement data obtained by applying a weighing procedure on both the bulk product and the product to be dosed. The dosing system according to the invention thereto comprises not only a dosing device as previously described, but also a first weighing unit to weigh the dosing device comprising the product to be dosed, an (optional) second weighing unit to weigh the bulk product in either the truck or the trailer and a computer device, preferably all mounted on the bulk truck/trailer. The computer device can advantageously be a microprocessor or a PLC (Programmable Logic Controller). The weighing functionality is provided by means of sensors developed to absorb the radial and axial forces (g-forces) on the truck when driving and stopping and yet to maintain good weighing properties. The whole system comprising the dosing device, the weighing unit(s) and the computer device can advantageously be mounted anywhere on the vehicle (for example on the side).

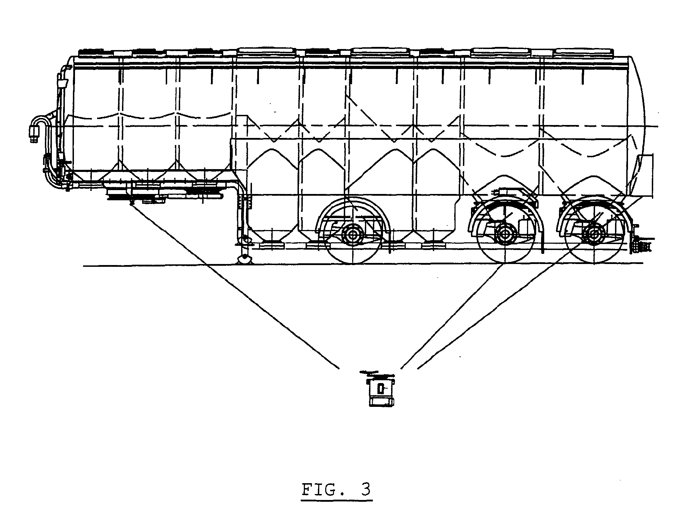

In a first step the weight is determined of the truck or trailer comprising the bulk product, to which a product to be dosed is to be added. The bulk product is typically divided over one or more compartments of the truck or trailer (see Fig.3).

First the case of a truck is considered. The weighing unit of the dosing system comprises a plurality of weight sensors called load cells. The load cells are connected to the truck in order to perform the weighing. For example, for a 26 tons truck, typically six load cells are required to absorb the axial and radial forces occurring when driving/stopping and to provide a large enough bearing surface between bulk and truck chassis in order to prevent the construction or chassis from cracking. The load cells preferably are mounted between the chassis of the truck and the bulk. Each load cell comprises a weighing amplifier. The weighing amplifiers further carry out a compensation for potential vibrations and a possibly tilted position of the truck and subsequently convert the resulting signal from the load cells into a serial signal. This signal then is transmitted to the microprocessor. The weighing operation yields the gross weight of the bulk construction + the bulk product stored in the various compartments of the bulk construction. The net weight of the bulk product can then easily be derived. The acquired measurement data can be stored and processed in the computer device.

In case of a trailer, a different approach is followed. Typically each axle with air suspension on a trailer is provided with two air buffers, in which air transducers are mounted. An air weighing is then performed on one, two or three different axles by sensing the air pressure in the suspension air line. Then the signal is converted into an electrical signal, which is also compensated. Further also a load cell weighing operation is performed on the fifth wheel (i.e. the heavy duty coupling device to couple the trailer). Two digital load cells have to be mounted under the fifth wheel. The signal from the load cells is converted into a serial signal after having been compensated for potential vibrations and a possibly tilted position. The serial signal is protected against external influences from e.g. magnetic fields etc... The combination of the signals output by the air weighing and load cell weighing then yields the total weight of the trailer. The acquired data are subsequently transmitted to the computer device. All measurement data is visualised on a display connected to the microprocessor.

After installing the weighing sensors on the truck or trailer a calibration is required in order to obtain a properly functioning weighing system.

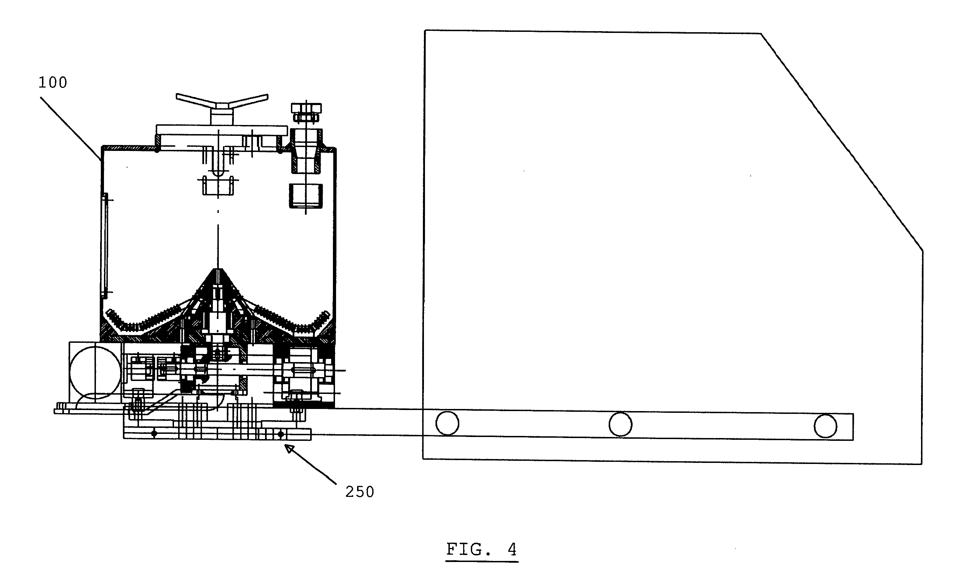

Not only the truck or trailer carrying the bulk product is subject to a weighing procedure, but also the dosing device. A second weighing unit provided with sensors is provided for that purpose. The weighing is performed with a three-point weighing on load cells. In a preferred embodiment the load cells are integrated into the chassis that bears the dosing device (see Fig.4). Before filling the dosing device with the product to be dosed a first weighing is performed. This gives information on the tare weight of the dosing device. Next the dosing device can be filled, after which another weighing operation is performed. Also the weighing data relating to the dosing device all are compensated for vibrations and a possible tilted position of the truck, converted into serial signals and finally transmitted to the computer device.

At the installation of the system some 'fixed' parameters are entered into the system, like the total number of compartments in the vehicle and the maximum weight of the product inside each of the compartments. This information allows detecting errors before or while discharging. Before starting a particular discharging and dosing operation several other parameters can or have to be entered into the system. The operator enters into the computer device from which compartment there is to be discharged and how much product that compartment actually contains. In a further embodiment it is provided that when a weight is entered exceeding the allowed maximum weight, an alarm signal is triggered and the dosing operation is not initiated. Several more alarm functions may be provided, e.g. in case the required weight of product to be dosed into an amount of bulk product exceeds the maximum capacity of the dosing device. In another scenario the discharge rate of the bulk product may be too low. This may happen when the pipe through which the bulk product is transported, is obstructed or when the silo is full. Also the discharge rate of the product to be dosed may be too low, which may occur when a tube is blocked or due to any unforeseen, exceptional circumstances. Further an emergency stop function and a secured seal to make sure that the system cannot operate when the seal is not closed, may be provided.

The initial (i.e. during the first 10 seconds) discharge rate of the dosing device is calculated from the average bulk discharge rate during the previous two discharging operations. The average bulk discharge rate is determined by repeatedly weighing. During operation an average bulk discharge rate is determined 10 times per second. Every 2 seconds an average value is calculated to determine the discharge rate during the next 2 seconds. Also the dosing device with the product to be dosed is weighed repeatedly. The discharge rate of the dosing device is adjusted accordingly by the microprocessor by regulating the rotor speed. The evolution of the discharging process can be visualised on a display connected to the microprocessor. This may help the operator to timely discover any malfunction.

The presence of the computer device allows a further processing of the stored data, like making graphics of discharging parameters, transmitting certain data to other computers, linking the stored data to client related data etc...

The discharge rate, which is influenced by the position of the compartment, by the pressure in the pipe, distance to the silo, kind of bulk product being discharged, is continuously measured and the microprocessor continuously controls the dosing device, such that the product to be dosed is always spread homogeneously over the bulk product, irrespective of the bulk discharge rate.

The same principle can be applied to all kinds of bulk vehicles, high and low pressure bulk trucks, skip cars.

The dosing system as presented can be used in all applications where a product to be dosed is to be added while discharging a bulk lorry or bulk trailer.

Further advantages of the invention lie in the fact that the power supply of the truck is reused, that means for extensive data registration are provided, that an improved control over the discharging operation is possible,.... The solution according to the invention also avoids the need for heavy investments in modifications of the production line at the premises of the feed manufacturers.

## Claims

1. Dosing system for adding a product to be dosed to a bulk product being discharged, comprising
- a dosing device (100) containing said product to be dosed,
- a first weighing unit (250) comprising a plurality of weighing sensors arranged for weighing said product to be dosed and
- a computer device (300), said computer device arranged for receiving weighing data from said first weighing unit and weighing data related to said bulk product and arranged for adjusting the discharge rate of said dosing device, based on said received weighing data.

2. Dosing system as in claim 1, wherein said plurality of weighing sensors of said first weighing unit (250) comprises load cells.

3. Dosing system as in claim 2, wherein said load cells are mounted in a chassis bearing said dosing device (100).

4. Dosing system as in any of claims 1 to 3, further comprising a second weighing unit (200) comprising a plurality of weighing sensors arranged for providing said weighing data related to said bulk product.

5. Dosing system as in claim 4, wherein said plurality of weighing sensors of said second weighing unit (200) comprises load cells and air pressure sensors.

6. Dosing system as in claim 4 or 5, wherein said second weighing unit (200) further comprises air transducers.

7. Dosing system as in any of the previous claims, wherein said computer device (300) is further arranged for storing weighing data and/or information related to the dosing and discharge process.

8. Dosing system as in any of the previous claims, wherein said computer device (300) is a microprocessor.

9. Dosing system as in any of the previous claims, wherein said dosing device (100) is further provided with a transparent pipe through for injecting said product to be dosed into said bulk product.

10. Bulk truck or a bulk trailer on which a dosing system as in any of the previous claims is mounted.

11. Bulk truck or a bulk trailer as in claim 10, wherein said dosing system is driven by the power supply of said bulk truck or of a truck to which said bulk trailer is coupled.

12. Method for adding a product to be dosed to a bulk product, comprising the steps of
- providing a dosing system as in any of claims 1 to 9,
- determining the weight of said bulk product to be discharged,
- determining the weight of said product to be dosed, said product to be dosed being contained in said dosing device of said dosing system,
- initiating the discharge of said bulk product,
- calculating the rate at which said product to be dosed is added,
- adding at said calculated rate said product to be dosed to said bulk product being discharged,
- performing repeated weighing operations on the weight of the remaining bulk product and the remaining product to be dosed,
- adjusting repeatedly the discharge rate of said product to be dosed based on data from said repeated weighing operations.
